(19) Europäisches Patentamt
European Patent Office
Office européen des brevets

(11) **EP 4 004 489 B1**

(12) **EUROPEAN PATENT SPECIFICATION**

(45) Date of publication and mention
of the grant of the patent:
**10.06.2026 Bulletin 2026/24**

(21) Application number: **19749664.9**

(22) Date of filing: **26.07.2019**

(51) International Patent Classification (IPC):
*G01C 21/00* *(2006.01)* *G01C 21/32* *(2006.01)*
*G01C 21/34* *(2006.01)*

(52) Cooperative Patent Classification (CPC):
**G01C 21/3469; G01C 21/005; G01C 21/3822;
G01C 21/3841**

(86) International application number:
**PCT/EP2019/070281**

(87) International publication number:
**WO 2021/018371 (04.02.2021 Gazette 2021/05)**

(54) **A METHOD FOR DETERMINING ROAD CONDITIONS**

**VERFAHREN ZUR BESTIMMUNG VON STRASSENBEDINGUNGEN**

**PROCÉDÉ POUR DÉTERMINER DES CONDITIONS DE ROUTE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.06.2022 Bulletin 2022/22**

(73) Proprietor: **VOLVO TRUCK CORPORATION
405 08 Göteborg (SE)**

(72) Inventor: **ASKERDAL, Mikael
439 51 ÅSA (SE)**

(74) Representative: **Kransell & Wennborg KB
P.O. Box 2096
403 12 Göteborg (SE)**

(56) References cited:
**WO-A1-2010/081836 US-A1- 2011 060 495
US-A1- 2016 153 796**

**Description**

TECHNICAL FIELD

The present disclosure relates to a method for determining road conditions, where the road conditions are arranged to be vehicle independent to thereby improve the usability to any form of vehicles to operate along a segment of a road. The present disclosure also relates to a corresponding control arrangement and to a computer program product.

BACKGROUND

Over the recent years there have been great advances in navigation of vehicles, e.g. improving the selection of a route to travel from a start location to a destination location. Proper selection of the route may allow for a reduced energy consumption for the vehicle.

Generally, the vehicle may be equipped with an electronic navigation device that makes decisions concerning the route based on simple metrics, such as shortest route from the start location to the destination location, which may possibly be altered to exclude toll roads or freeways. As an alternative, it may be possible to configure the navigation device to select the shortest time based on recorded speed limits for the possible routes available. Some navigation devices can connect online in order to get congestion data, where the congestion data is based on information from sensors arranged along the route. Accordingly, such congestion data will be patchy and may only apply to well-travelled road segments. In addition, such conventional data gathering methods can be uneconomical for most roads.

Recently, there has been a trend to additionally include crowdsourced data relating to the route. Crowdsourced data is data that is provided by a large number of unknown individuals via the Internet. For example, using actual data provided by vehicles located at the route who supply information about traffic conditions they encounter, a map may be maintained about traffic conditions.

A further improvement in this regard is presented in US2016025508, suggesting the use of crowdsourced data relating to the actual energy consumption of the vehicles travelling along the route. Using the collected data, it is in US2016025508 suggested to allow the collected energy consumption related information to be used in the decision making as to select the route from the start location to the destination location that generates the lowest possible energy consumption.

Even though the solution in US2016025508 presents an interesting approach to further reduce the energy consumption when operating a vehicle, there appears to be room for further improvements in relation to how the actual energy consumption to be used in such determinations are to be formulated, ensuring that the following calculations may be swift and computational efficient.

WO 2010/081836 discloses probe data being analyzed to derive Longitudinal Speed Profiles (LSPs) and an Optimal Longitudinal Speed Profile (OLSP) for each road segment in a digital map network. The Longitudinal Speed Profiles (LSPs) are calculated during defined time spans whereas the Optimal Longitudinal Speed Profile is based on the LSP for the time span corresponding only to free flow traffic conditions. All of the LSPs can be used to create a respective energy cost for each time span, or only the OLSP can be used to calculate an energy cost for the free flow conditions only. The energy cost can be used to predict the energy required by a vehicle to traverse the link. Navigation software can use the energy cost to plan the most energy efficient route between two locations in the digital map.

SUMMARY

According to an aspect of the present invention, the above is at least partly alleviated by a computer implemented method adapted to determine road conditions for a road, according to claim 1.

The present disclosure is based upon the realization that it is possible to further improve functions in vehicles that need accurate energy consumption prediction such as range estimation, route planning and energy management. Specifically, and as presented in line with the present disclosure, the energy consumption of a vehicle depends on both the vehicle itself, for example vehicle mass, aerodynamic properties and tires, and the environment, for example road conditions and weather.

Accordingly, to further improve how such energy consumption determination may be accomplished, the present disclosure suggests collecting data at the location where the vehicle is currently operating, including a road resistance for the location of the vehicle in combination with sensitivity parameters for the first vehicle. The collected data is then transmitted to a remote server, where the server in turn may form a vehicle independent road condition for the position where the vehicle is located, typically related to a segment of a road.

Advantages following the present disclosure lie in that the server must not necessarily store vehicle specific data. Rather, the server may form and e.g. subsequently provide the vehicle independent road condition to other vehicles. That is, the information may be provided/used by any form and type of vehicle, thus not necessarily limited to the type of vehicle that "collected" the data.

It should be understood that the expression "road conditions" relates to road and weather conditions that affects the energy consumption of the vehicle, but are vehicle independent. For example, road conditions may relate to wind speed, wind direction and road surface conditions, etc. Further conditions are however possible and within the scope of the present disclosure.

Furthermore, the expression "road resistance value" should within the context of the present disclosure be understood to relate to the total amount of net energy at the wheels needed for that specific vehicle to overcome the road resistance force acting on the vehicle on that specific road segment with the vehicle operations, e.g. vehicle speed profile, given. The road resistance is hence something that depends on vehicle operations, sensitivity parameters, road conditions and road segment length. In turn, the road resistance force should be seen as the sum of the external forces resisting the vehicle motion of a vehicle. In this text it includes air resistance and rolling resistance forces but may or may not include other resistance forces as well such as grade resistance and cornering resistance forces.

Still further, it should be understood that the expression "sensitivity parameters for the first vehicle" in line with the present disclosure should be interpreted broadly, generally relating to how the type of the first vehicle will be impacted based on environmental factors relating to where the first vehicle is operating. As such, the sensitivity parameters for the vehicle should be seen as a way of describing how sensitive the energy consumption of the vehicle is to different kind of road conditions and vehicle operations. According to the invention, the sensitivity parameters for the first vehicle are related to aerodynamic properties for the first vehicle (such as including an air drag coefficient), i.e. in turn relating to how the first vehicle is constructed/formed.

Correspondingly, the road resistance values being specific for the first vehicle are based on at least one of a weight, a tire selection/property, a temperature at or a length of the first road segment.

Thus, in line with the present disclosure the method further comprises the steps of distributing, using the server the vehicle independent road condition for the first segment to a second vehicle using the networked connection the second vehicle travelling along the road and estimating, onboard the second vehicle, an energy consumption for the second vehicle when travelling at the first segment based on the vehicle independent road condition for the first segment and a current operation of the second vehicle at the first road segment.

As understood from the above, the second vehicle accordingly makes use of the data collected by the first vehicle in its process of determining an energy consumption for typically the corresponding road segment. The determined energy consumption may in turn be used by the second vehicle for e.g. determining what route to select from the start location to the destination location, possibly with focus on minimizing the total energy consumption for the second vehicle. Further possibilities/opportunities may be identified, while the invention further comprises estimating an operational range for the second vehicle based on the determined total energy consumption.

In some embodiments it may be suitable to allow the determination of the total energy consumption for the second vehicle to further be dependent on a predicted speed for the first road segment. As such, different speed profiles for the second vehicle in relation to the first road segment may provide different overall results in regards to the total energy consumption for the second vehicle.

Within the scope of the present disclosure it may additionally be possible to also take into account a weather report, relating to the road segment where the first vehicle is operating, when estimating the vehicle independent road condition. The weather report may for example be based on an input from environmental sensors (wind, humidity, rain or snowfall, etc.) located in a proximity to the road segment where the first vehicle is operating.

According to another aspect of the present invention, there is provided a control arrangement adapted to determine road conditions for a road according to claim 4. This aspect of the present invention provides similar advantages as discussed above in relation to the previous aspect of the present invention.

In a preferred embodiment of the present disclosure the control arrangement further comprises the first and the second vehicle. Also, the vehicle may e.g. be one of a bus, a truck, a car, or any form of construction equipment. The vehicle may furthermore be at least one of a pure electrical vehicle (PEV) and a hybrid electric vehicle (HEV). Furthermore, the vehicle may in some embodiments be an autonomously operated vehicle, such as a semi or fully autonomously operated vehicle.

According to a further aspect of the present invention, there is provided a computer program product comprising a non-transitory computer readable medium having stored thereon computer program means for operating a control arrangement adapted to determine road conditions for a road according to claim 10.

Also this aspect of the present disclosure provides similar advantages as discussed above in relation to the previous aspects of the present invention.

The computer readable medium may be any type of memory device, including one of a removable nonvolatile random access memory, a hard disk drive, a floppy disk, a CD-ROM, a DVD-ROM, a USB memory, an SD memory card, or a similar computer readable medium known in the art.

Further advantages and advantageous features of the present disclosure are disclosed in the following description and in the dependent claims.

BRIEF DESCRIPTION OF THE DRAWINGS

With reference to the appended drawings, below follows a more detailed description of embodiments of the present disclosure cited as examples.

In the drawings:

Figs. 1A illustrates a truck, 1B a bus and 1C a car that may be used in conjunction with the control scheme according to the present disclosure;
Fig. 2 illustrates a conceptual control arrangement in accordance to a currently preferred embodiment of the present disclosure;
Fig. 3 exemplifies a plurality of vehicles operating along a road comprising a plurality of road segments; and
Fig. 4 illustrates the processing steps for performing the method according to the present disclosure.

DETAILED DESCRIPTION OF EXAMPLE EMBODIMENTS OF THE INVENTION

The present disclosure will now be described more fully hereinafter with reference to the accompanying drawings, in which currently preferred embodiments of the present disclosure are shown. This disclosure may, however, be embodied in many different forms and should not be construed as limited to the embodiments set forth herein; rather, these embodiments are provided for thoroughness and completeness, and fully convey the scope of the disclosure to the skilled addressee. Like reference characters refer to like elements throughout.

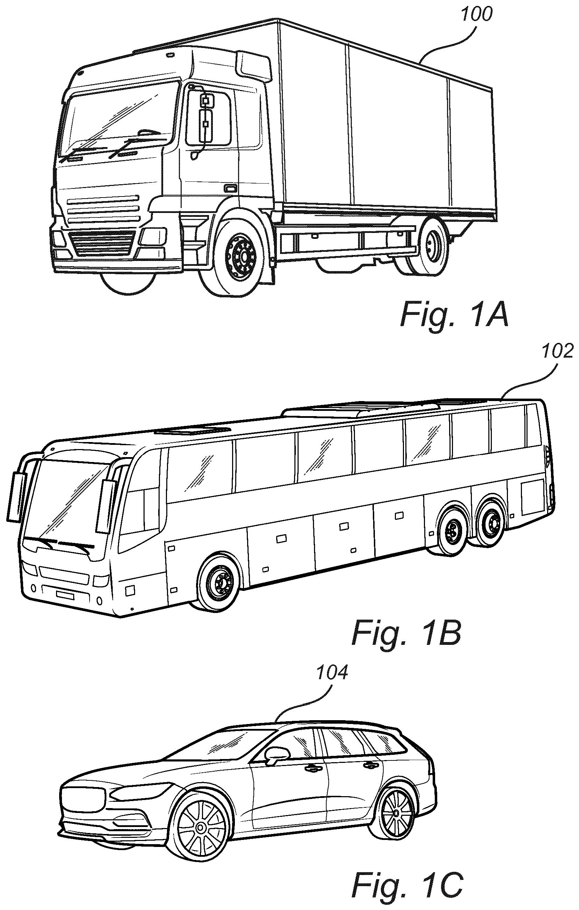

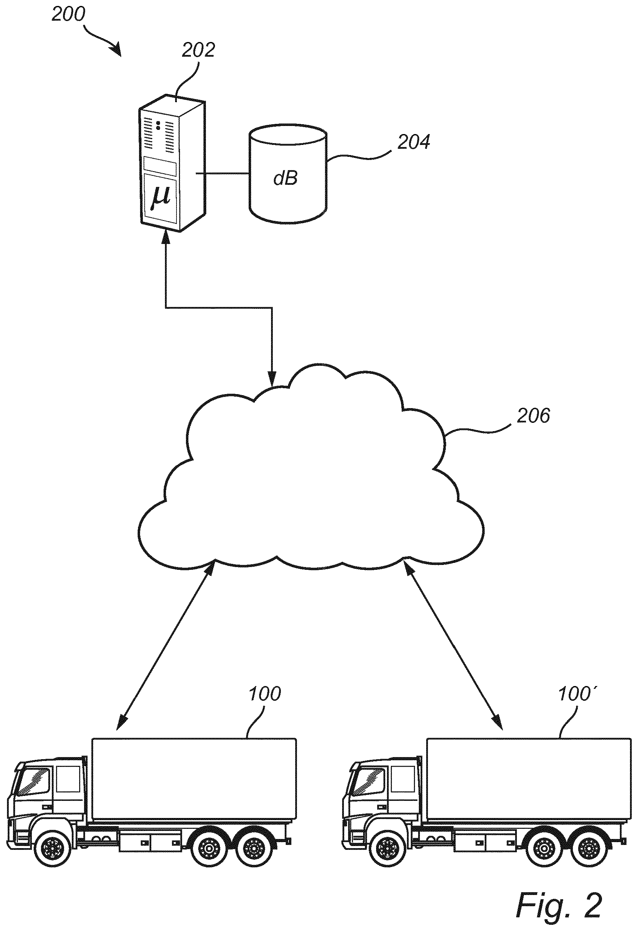

Referring now to the drawings and to Fig. 1A in particular, there is depicted an exemplary vehicle, here illustrated as a truck 100, where the truck 100 e.g. may be comprised with a control arrangement 200 (as shown in Fig. 2). The control arrangement 200 may of course be implemented, possibly in a slightly different way, in case e.g. a bus 102 as shown in Fig. 1B, a car as shown in Fig. 1C, etc., would be included with the control arrangement 200.

The vehicle may for example be one of an electric or hybrid vehicle, or possibly a gas, gasoline or diesel vehicle. The vehicle comprises an electric machine (in case of being an electric or hybrid vehicle or an engine (such as an internal combustion engine in case of being a gas, gasoline or diesel vehicle. The vehicle may further be manually operated, fully or semi-autonomous.

Fig. 2 shows a conceptual and exemplary implementation of the control arrangement 200 according to the present disclosure, presented in a non-limiting manner. Other ways of implementing the control arrangement 200 are possible, as long as they fall within the scope of the appended claims.

As is shown, the control arrangement 200 comprises a server 202 and a database 204, where the server 202 is connected to a plurality of vehicles, such as a first 100 and a second 100' vehicle, using a networked connection, such as the Internet 206. Following such an implementation, the vehicles 100, 100' are each provided with a transceiver (not shown), allowing the vehicles 100, 100' to wirelessly communicate with the server 202.

For reference, the transceivers may be arranged to allow for any form of wireless connections like WLAN, CDMA, GSM, GPRS, 3G mobile communications, 3/4/5G mobile communications, or similar. Other present of future wireless communication protocols are possible and within the scope of the present disclosure, such as any form of Vehicle-to-everything (V2X) communication protocols.

Furthermore, the vehicles 100, 100' are each provided with at least one electronic control unit (ECU)(not shown), where the ECU of the respective vehicle 100, 100' is arranged in communication with one or a plurality of sensors (also not shown) for collecting data relating to the operation of the vehicles 100, 100'. Such sensors may for example be configured to collect data relating to a speed of the vehicle, an inclination at which the vehicle 100, 100' is currently operating, a sensor for measuring a tire pressure, etc.

The ECUs may for example be manifested as a general-purpose processor, an application specific processor, a circuit containing processing components, a group of distributed processing components, a group of distributed computers configured for processing, a field programmable gate array (FPGA), etc. The processor may be or include any number of hardware components for conducting data or signal processing or for executing computer code stored in memory. The memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection and includes computer code for executing one or more processes described herein.

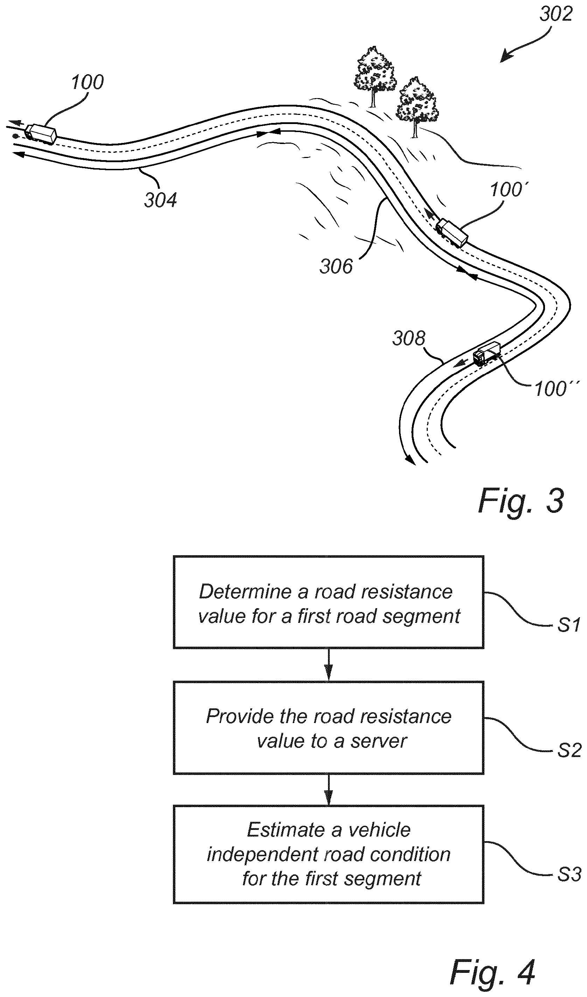

During operation, with further reference to Figs. 3 and 4, the first vehicle 100 is shown as operating along a road 302 in a first direction. The road 302 in turn comprises a plurality of road segments 304, 306, 308. A second vehicle 100' is also travelling along the road in the same direction as the first vehicle 100. Additionally, a third vehicle 100" is shown as travelling in a second direction, the second direction being opposite to the first direction. It is further noted in Fig. 3 that the second vehicle 100' is "behind" and following the first vehicle 100. Accordingly, the second vehicle 100' will in the presented example at a later point in time reach a current location of the first vehicle 100. The current location for the first vehicle 100 is in Fig. 3 shown as corresponding to road segment 304. The second vehicle 100' is in turn currently located at another road segment, here illustrated as road segment 306.

In accordance to the present disclosure, when the first vehicle 100 is operating at the road segment 304, information indicative of an energy consumption for the first vehicle 100 is determined, S1. The information indicative of the energy consumption for the first vehicle 100 is subsequently provided, S2, to the server 202, in a possible embodiment together with a root mean square of the speed for the first vehicle 100 over the segment 306, as well as a driving direction (here the "first direction"). Additionally, the first vehicle 100 is to communicate its "sensitivity parameters" to the server 202, such as a current aerodynamic property for the first vehicle 100 as has been discussed above.

Once the information has been made available at the server 202, at least intermediately stored at the database 204, the server 202 estimates a vehicle independent road condition for the first segment 304 based on the received information. Arranging the road condition for the first segment 304 to be vehicle independent may for example be done by performing a "normalization" of the received information.

This normalization can, for example, be done by using an energy consumption model such as:

$$\frac{W_w - W_p - W_k}{mgC_rS_h} = \frac{\rho A_f S}{2mgC_rS_h} \left(a + b \left| \text{atan}\left(\frac{|V_{wy}|}{DV_{wx}+\bar{v}}\right)\right| - c\, atan^2\left(\frac{|V_{wy}|}{DV_{wx}+\bar{v}}\right)\right)((\bar{v} + V_{wx} * Dir)^2 + V_{wy}^2) +$$

$$C_{r\_roadcond}$$

where $W_w$ is the net measured energy at the wheels, $W_p$ the change in potential energy over the segment, $W_k$ the change in kinetic energy over the segment, m is the vehicle mass, $\rho$ the air density, $A_f$ the frontal area, *a, b* and *c* are coefficients of a second order approximation of the attack angle dependent air resistance coefficient of the vehicle, $\bar{v}$ the root mean square of the vehicle speed over the segment, *g* the gravitational constant, $C_r$ the rolling resistance coefficient of the tires, $V_{wx}$ and $V_{wy}$ the wind speed components in x (head), and y directions (side wind), Dir the driving direction (either 1 or -1) and finally $C_{r\_roadcond}$ a compensation factor for the rolling resistance at the present road surface conditions.

The left-hand side (since the road segment is well-defined, it is assumed that the altitude at the starting and end points is well known and that the vehicle speed at the start and end is measured accurately) of the above equation describes the sum of normalized air resistance plus rolling resistance. By subtracting changes in kinetic and potential energy from the total wheel energy consumption, the sum of air and rolling resistance is calculated. By dividing this sum with $mgC_rS_h$, the resistance energy consumption is normalized in the sense that in zero wind conditions at really low vehicle speed (close to zero) this sum will be the same for all vehicles.

The right-hand side of the above equation includes the three unknown parameters to be estimated, $V_{wx}$, $|V_{wy}|$ and $C_{r\_roadcond}$. From the information of five scalar values; $\frac{W_w - W_p - W_k}{mgC_rS_h}$, $\frac{\rho A_f Sa}{2mgC_rS_h}$, $\frac{\rho A_f Sb}{2mgC_rS_h}$, $\frac{\rho A_f Sc}{2mgC_rS_h}$, $\bar{v}$, *Dir*, sent by each vehicle passing the road segment, a nonlinear estimation method such as the Extended Kalman Filter can be used to estimate $V_{wx}$, $|V_{wy}|$ and $C_{r\_roadcond}$. This estimation can be done with or without help of data from weather institutes and road weather measurements.

The usage of normalized energy consumption may be seen as a key ingredient to be able to make good estimates of local conditions, where such information subsequently is used for determining an energy consumption for the second vehicle 100' when, at a possibly slightly later point in time, travelling at the first segment 304.

As would be apparent, the estimation of the local road conditions is improved by gathering data from many vehicles running on that road segment while the estimates of vehicle parameters are improved by running a vehicle on many road segments where the road weather conditions are known.

In line with the present disclosure it is possible to apply a model-based approach for predicting an energy consumption for the second vehicle 100'. In line with the present disclosure, such a model-based vehicle energy prediction algorithm may in some embodiments be bound to include both vehicle parameters and environmental parameters affecting the energy consumption. If the ingoing parameters are more accurate, so will the resulting energy consumption estimate be. This improvement in prediction can be used in many ways, for example in electric vehicle range estimation.

By correlating stored historical data of estimated local road weather with stored historical general weather information, weather forecast could be used with this correlation to predict the local weather. Also, to improve the short time prediction, information about wind conditions together with local road weather nearby is used in this invention to establish how local weather is developing over time and space. For example, if the wind is coming from west and the local road weather in west is showing increasing rolling resistance, it is likely that it is raining and that this will spread to road segments further east in the near future. Historical data in line with the present disclosure is used to model how fast weather is developing in time depending on the present weather conditions.

Turning again to Fig. 3, where the first vehicle 100 is travelling along the road 302 and its current energy consumption is determined. When exiting the first segment 304, the energy consumption over the section is, at the server 202, normalized with vehicle parameters and vehicle speed. With or without information from external road weather services, the normalized current road conditions estimation is using the normalized energy consumption to improve the estimate. The road weather conditions on the upcoming road segment (i.e. segment 304) is sent to the second vehicle 100', where the second vehicle 100' uses this information to improve its own estimation on its vehicle parameters, as well as to improve short term predictive functions, including for example general energy management and eco-roll to be applied by the second vehicle 100'.

The estimated current road conditions may also be sent to a "road conditions prediction server" (possibly being the same or another server as compared to server 204) together with information about current road weather conditions as well as weather forecast from external road weather information sources. This data may possibly be correlated with stored historical data from the external sources, such as holding information relating to present weather conditions, to predict the road weather conditions on different (other) road segments.

The present disclosure contemplates methods, devices and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor.

By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless to a machine, the machine properly views the connection as a machine-readable medium. Thus, any such connection is properly termed a machine-readable medium. Combinations of the above are also included within the scope of machine-readable media. Machine-executable instructions include, for example, instructions and data that cause a general-purpose computer, special purpose computer, or special purpose processing machines to perform a certain function or group of functions.

Software implementations could be accomplished with standard programming techniques with rule-based logic and other logic to accomplish the various connection steps, processing steps, comparison steps and decision steps.

Additionally, even though the disclosure has been described with reference to specific exemplifying embodiments thereof, many different alterations, modifications and the like will become apparent for those skilled in the art.

Variations to the disclosed embodiments can be understood and effected by the skilled addressee in practicing the claimed disclosure, from a study of the drawings, the disclosure, and the scope of the invention, as defined in the appended claims. Furthermore, in the claims, the word "comprising" does not exclude other elements or steps, and the indefinite article "a" or "an" does not exclude a plurality.

## Claims

1.    A computer implemented method adapted to determine road conditions for a road (302), the road (302) comprising at least a first road segment (304), wherein the method comprises the steps of:

- determining (S1), by a control unit arranged onboard a first vehicle (100, 102, 104), a road resistance value for the first road segment (304) where the first vehicle (100, 102, 104) is currently travelling, wherein the road resistance value is dependent on a current operation of the first vehicle (100, 102, 104) at the first road segment (304) and at least one of a weight of the first vehicle, a tire selection for the first vehicle, or a temperature at or a length of the first road segment,

- providing (S2), by the onboard control unit, a collection of vehicle data to a server (202) arranged in networked communication (206) with the control unit, the collection of vehicle data comprising the road resistance value for the first road segment (304), operational data for the first vehicle (100, 102, 104) for the first road segment (304) and sensitivity parameters for the first vehicle (100, 102, 104), wherein the sensitivity parameters for the first vehicle (100, 102, 104) are related to aerodynamic properties for the first vehicle (100, 102, 104),

- estimating (S3), at the server (202), a vehicle independent road condition for the first segment (304) based on a plurality of corresponding collections of vehicle data for the first road segment (304) provided to the server (202) from a plurality of different vehicles including the first vehicle (100, 102, 104),

- distributing, using the server (202), the vehicle independent road condition for the first segment (304) to a second vehicle (100') using the networked connection (206), the second vehicle (100') travelling along the road (302),
- estimating, onboard the second vehicle (100'), an energy consumption for the second vehicle (100') when travelling at the first segment (304) based on the vehicle independent road condition for the first segment (304) and a current operation of the second vehicle (100') at the first road segment (304), and
- estimating, onboard the second vehicle (100'), a total energy consumption for the second vehicle (100') when travelling along the road (302), and
- estimating an operational range for the second vehicle (100') based on the total energy consumption for the second vehicle (100').

2. The method according to claim 1, wherein the total energy consumption is further dependent on a predicted speed for the first road segment (304).

3. The method according to any one of the preceding claims, wherein the step of estimating the vehicle independent road condition for the first segment (304) is further based on a weather report for the road (302) received at the server (202).

4. A control arrangement (200) adapted to determine road conditions for a road (302), the road (302) comprising at least a first road segment (304), the control arrangement (200) comprising a server (202) arranged in networked communication (206) with a first control unit arranged onboard a first vehicle (100, 102, 104) and a second control unit arranged onboard a second vehicle (100') wherein the control arrangement (200) is adapted to:

   - determine, by the first control unit, a road resistance value for the first road segment (304) where the first vehicle (100, 102, 104) is currently travelling, wherein the road resistance value is dependent on a current operation of the first vehicle (100, 102, 104) at the first road segment (304) and at least one of a weight of the first vehicle, a tire selection for the first vehicle, or a temperature at or a length of the first road segment,
   - provide, by the first control unit, a collection of vehicle data to the server (202), the collection of vehicle data comprising the road resistance value for the first road segment (304), operational data for the first vehicle (100, 102, 104) for the first road segment (304) and sensitivity parameters for the first vehicle (100, 102, 104), wherein the sensitivity parameters for the first vehicle (100, 102, 104) are related to aerodynamic properties for the first vehicle (100, 102, 104),
   - estimate, at the server (202), a vehicle independent road condition for the first segment (304) based on a plurality of corresponding collections of vehicle data for the first road segment (304) provided to the server (202) from a plurality of different vehicles including the first vehicle (100, 102, 104),
   - distribute, using the server (202), the vehicle independent road condition for the first segment (304) to the second control unit using the networked connection (206), the second vehicle (100') travelling along the road (302),
   - estimate, by the second control unit, an energy consumption for the second vehicle (100') when travelling at the first segment (304) based on the vehicle independent road condition for the first segment (304) and a current operation of the second vehicle (100') at the first road segment (304), and
   - estimate, by the second control unit, a total energy consumption for the second vehicle (100') when travelling along the road (302), and
   - estimate an operational range for the second vehicle (100') based on the total energy consumption for the second vehicle (100').

5. The control arrangement (200) according to claim 4, wherein the total energy consumption is further dependent on a predicted speed for the first road segment (304).

6. The control arrangement (200) according to any one of claims 4-5, wherein the step of estimating the vehicle independent road condition for the first segment (304) is further based on a weather report for the road (302) received at the server (202).

7. The control arrangement (200) according to any one of claims 4-6, further comprising the first and the second vehicle (100').

8. The control arrangement (200) according to any one of claims 4-7, wherein at least one of the first and the second vehicle is a truck (100, 100'), a bus (102) or a car (104).

9. The control arrangement (200) according to claim 8, wherein the truck is autonomously operated.

10. A computer program product comprising a non-transitory computer readable medium having stored thereon computer program means for operating a control arrangement (200) adapted to determine road conditions for a road (302), the road (302) comprising at least a first road segment (304), the control arrangement (200) comprising a server (202) arranged in networked communication (206) with a first control unit arranged onboard a first vehicle (100, 102, 104) and a second control unit arranged onboard a second vehicle (100') wherein the computer program product comprises:

- code for determining, by the first control unit, a road resistance value for the first road segment (304) where the first vehicle (100, 102, 104) is currently travelling, wherein the road resistance value is dependent on a current operation of the first vehicle (100, 102, 104) at the first road segment (304) and at least one of a weight of the first vehicle, a tire selection for the first vehicle, or a temperature at or a length of the first road segment,

- code for providing (S2), by the first control unit, a collection of vehicle data to the server, the collection of vehicle data comprising the road resistance value for the first road segment (304), operational data for the first vehicle (100, 102, 104) for the first road segment (304) and sensitivity parameters for the first vehicle (100, 102, 104), wherein the sensitivity parameters for the first vehicle (100, 102, 104) are related to aerodynamic properties for the first vehicle (100, 102, 104),

- code for estimating (S3), at the server (202), a vehicle independent road condition for the first segment (304) based on a plurality of corresponding collections of vehicle data for the first road segment (304) provided to the server (202) from a plurality of different vehicles including the first vehicle (100, 102, 104),

- code for distributing, using the server (202), the vehicle independent road condition for the first segment (304) to the second control unit using the networked connection (206), the second vehicle (100') travelling along the road (302),

- code for estimating, by the second control unit, an energy consumption for the second vehicle (100') when travelling at the first segment (304) based on the vehicle independent road condition for the first segment (304) and a current operation of the second vehicle (100') at the first road segment (304), and

- coder for estimating, by the second control unit, a total energy consumption for the second vehicle (100') when travelling along the road (302), and

- code for estimating an operational range for the second vehicle (100') based on the total energy consumption for the second vehicle (100').

**Patentansprüche**

1. Computerimplementiertes Verfahren, das ausgelegt ist, um Straßenbedingungen für eine Straße (302) zu bestimmen, wobei die Straße (302) mindestens ein erstes Straßensegment (304) umfasst, wobei das Verfahren die folgenden Schritte umfasst:

- Bestimmen (S1), durch eine an Bord eines ersten Fahrzeugs (100, 102, 104) angeordnete Steuereinheit, eines Straßenwiderstandswerts für das erste Straßensegment (304), auf dem das erste Fahrzeug (100, 102, 104) momentan fährt, wobei der Straßenwiderstandswert von einem aktuellen Betrieb des ersten Fahrzeugs (100, 102, 104) auf dem ersten Straßensegment (304) und von mindestens einem von einem Gewicht des ersten Fahrzeugs, einer Reifenauswahl für das erste Fahrzeug oder einer Temperatur an dem ersten Straßensegment oder einer Länge des letzteren abhängt,

- Bereitstellen (S2), durch die Steuereinheit an Bord, einer Sammlung von Fahrzeugdaten an einen Server (202), der in einer vernetzten Kommunikation (206) mit der Steuereinheit angeordnet ist, wobei die Sammlung von Fahrzeugdaten den Straßenwiderstandswert für das erste Straßensegment (304), Betriebsdaten für das erste Fahrzeug (100, 102, 104) für das erste Straßensegment (304) und Empfindlichkeitsparameter für das erste Fahrzeug (100, 102, 104) umfasst, wobei die Empfindlichkeitsparameter für das erste Fahrzeug (100, 102, 104) sich auf aerodynamische Eigenschaften des ersten Fahrzeugs (100, 102, 104) beziehen,

- Schätzen (S3), auf dem Server (202), einer fahrzeugunabhängigen Straßenbedingung für das erste Straßensegment (304) basierend auf einer Vielzahl von entsprechenden Sammlungen von Fahrzeugdaten für das erste Straßensegment (304), die dem Server (202) von einer Vielzahl von verschiedenen Fahrzeugen, einschließlich des ersten Fahrzeugs (100, 102, 104), bereitgestellt werden,

- Verteilen, unter Verwendung des Servers (202), der fahrzeugunabhängigen Straßenbedingung für das erste Segment (304) an ein zweites Fahrzeug (100') unter Verwendung der vernetzten Verbindung (206), wobei das zweite Fahrzeug (100') entlang der Straße (302) fährt,

- Schätzen, an Bord des zweiten Fahrzeugs (100'), eines Energieverbrauchs für das zweite Fahrzeug (100'), wenn dieses auf dem ersten Straßensegment (304) fährt, basierend auf der fahrzeugunabhängigen Straßenbedingung für das erste Segment (304) und einem aktuellen Betrieb des zweiten Fahrzeugs (100') auf dem ersten Straßensegment (304), und
- Schätzen, an Bord des zweiten Fahrzeugs (100'), eines Gesamtenergieverbrauchs für das zweite Fahrzeug (100'), wenn dieses entlang der Straße (302) fährt, und
- Schätzen einer Betriebsreichweite für das zweite Fahrzeug (100') basierend auf dem Gesamtenergieverbrauch für das zweite Fahrzeug (100').

2. Verfahren nach Anspruch 1, wobei der Gesamtenergieverbrauch ferner von einer vorhergesagten Geschwindigkeit für das erste Straßensegment (304) abhängt.

3. Verfahren nach einem der vorhergehenden Ansprüche, wobei der Schritt des Schätzens der fahrzeugunabhängigen Straßenbedingung für das erste Segment (304) ferner auf einem auf dem Server (202) empfangenen Wetterbericht für die Straße (302) basiert.

4. Steueranordnung (200), die ausgelegt ist, um Straßenbedingungen für eine Straße (302) zu bestimmen, wobei die Straße (302) mindestens ein erstes Straßensegment (304) umfasst, wobei die Steueranordnung (200) einen Server (202) umfasst, der in einer vernetzten Kommunikation (206) mit einer ersten Steuereinheit, die an Bord eines ersten Fahrzeugs (100, 102, 104) angeordnet ist, und einer zweiten Steuereinheit angeordnet ist, die an Bord eines zweiten Fahrzeugs (100') angeordnet ist, wobei die Steueranordnung (200) für Folgendes ausgelegt ist:

- Bestimmen, durch die erste Steuereinheit, eines Straßenwiderstandswerts für das erste Straßensegment (304), auf dem das erste Fahrzeug (100, 102, 104) momentan fährt, wobei der Straßenwiderstandswert von einem aktuellen Betrieb des ersten Fahrzeugs (100, 102, 104) auf dem ersten Straßensegment (304) und von mindestens einem von einem Gewicht des ersten Fahrzeugs, einer Reifenauswahl für das erste Fahrzeug oder einer Temperatur an dem ersten Straßensegment oder einer Länge des letzteren abhängt,
- Bereitstellen, durch die erste Steuereinheit, einer Sammlung von Fahrzeugdaten an den Server (202), wobei die Sammlung von Fahrzeugdaten den Straßenwiderstandswert für das erste Straßensegment (304), Betriebsdaten für das erste Fahrzeug (100, 102, 104) für das erste Straßensegment (304) und Empfindlichkeitsparameter für das erste Fahrzeug (100, 102, 104) umfasst, wobei die Empfindlichkeitsparameter für das erste Fahrzeug (100, 102, 104) sich auf aerodynamische Eigenschaften des ersten Fahrzeugs (100, 102, 104) beziehen,
- Schätzen, auf dem Server (202), einer fahrzeugunabhängigen Straßenbedingung für das erste Segment (304) basierend auf einer Vielzahl von entsprechenden Sammlungen von Fahrzeugdaten für das erste Straßensegment (304), die dem Server (202) von einer Vielzahl von verschiedenen Fahrzeugen, einschließlich des ersten Fahrzeugs (100, 102, 104), bereitgestellt werden,
- Verteilen, unter Verwendung des Servers (202), der fahrzeugunabhängigen Straßenbedingung für das erste Segment (304) an die zweite Steuereinheit unter Verwendung der vernetzten Verbindung (206), wobei das zweite Fahrzeug (100') entlang der Straße (302) fährt,
- Schätzen, durch die zweite Steuereinheit, eines Energieverbrauchs für das zweite Fahrzeug (100'), wenn dieses auf dem ersten Segment (304) fährt, basierend auf der fahrzeugunabhängigen Straßenbedingung für das erste Segment (304) und einem aktuellen Betrieb des zweiten Fahrzeugs (100') auf dem ersten Straßensegment (304), und
- Schätzen, durch die zweite Steuereinheit, eines Gesamtenergieverbrauchs für das zweite Fahrzeug (100'), wenn dieses entlang der Straße (302) fährt, und
- Schätzen einer Betriebsreichweite für das zweite Fahrzeug (100') basierend auf dem Gesamtenergieverbrauch für das zweite Fahrzeug (100').

5. Steueranordnung (200) nach Anspruch 4, wobei der Gesamtenergieverbrauch ferner von einer vorhergesagten Geschwindigkeit für das erste Straßensegment (304) abhängt.

6. Steueranordnung (200) nach einem der Ansprüche 4-5, wobei der Schritt des Schätzens der fahrzeugunabhängigen Straßenbedingungen für das erste Segment (304) ferner auf einem auf dem Server (202) empfangenen Wetterbericht für die Straße (302) basiert.

7. Steueranordnung (200) nach einem der Ansprüche 4-6, die ferner das erste und das zweite Fahrzeug (100') umfasst.

8. Steueranordnung (200) nach einem der Ansprüche 4-7, wobei mindestens eines des ersten und des zweiten Fahrzeugs ein Lkw (100, 100'), ein Bus (102) oder ein Pkw (104) ist.

9. Steueranordnung (200) nach Anspruch 8, wobei der Lkw autonom betrieben wird.

10. Computerprogrammprodukt, das ein nichtflüchtiges, computerlesbares Medium umfasst, auf dem Computerprogrammmittel zum Betreiben einer Steueranordnung (200) gespeichert sind, die ausgelegt ist, um die Straßenbedingungen für eine Straße (302) zu bestimmen, wobei die Straße (302) mindestens ein erstes Straßensegment (304) umfasst, wobei die Steueranordnung (200) einen Server (202) umfasst, der in einer vernetzten Kommunikation (206) mit einer ersten Steuereinheit, die an Bord eines ersten Fahrzeugs (100, 102, 104) angeordnet ist, und einer zweiten Steuereinheit angeordnet ist, die an Bord eines zweiten Fahrzeugs (100') angeordnet ist, wobei das Computerprogrammprodukt umfasst:

- Code zum Bestimmen, durch die erste Steuereinheit, eines Straßenwiderstandswerts für das erste Straßensegment (304), auf dem das erste Fahrzeug (100, 102, 104) momentan fährt, wobei der Straßenwiderstandswert von einem aktuellen Betrieb des ersten Fahrzeugs (100, 102, 104) auf dem ersten Straßensegment (304) und von mindestens einem von einem Gewicht des ersten Fahrzeugs, einer Reifenauswahl für das erste Fahrzeug oder einer Temperatur an dem ersten Straßensegment oder einer Länge des letzteren abhängt,
- Code zum Bereitstellen (S2), durch die erste Steuereinheit, einer Sammlung von Fahrzeugdaten an den Server, wobei die Sammlung von Fahrzeugdaten den Straßenwiderstandswert für das erste Straßensegment (304), Betriebsdaten für das erste Fahrzeug (100, 102, 104) für das erste Straßensegment (304) und Empfindlichkeitsparameter für das erste Fahrzeug (100, 102, 104) umfasst, wobei die Empfindlichkeitsparameter für das erste Fahrzeug (100, 102, 104) sich auf aerodynamische Eigenschaften des ersten Fahrzeugs (100, 102, 104) beziehen,
- Code zum Schätzen (S3), auf dem Server (202), einer fahrzeugunabhängigen Straßenbedingung für das erste Segment (304) basierend auf einer Vielzahl von entsprechenden Sammlungen von Fahrzeugdaten für das erste Straßensegment (304), die dem Server (202) von einer Vielzahl von verschiedenen Fahrzeugen, einschließlich des ersten Fahrzeugs (100, 102, 104), bereitgestellt werden,
- Code zum Verteilen, unter Verwendung des Servers (202), der fahrzeugunabhängigen Straßenbedingung für das erste Segment (304) an die zweite Steuereinheit unter Verwendung der vernetzten Verbindung (206), wobei das zweite Fahrzeug (100') entlang der Straße (302) fährt,
- Code zum Schätzen, durch die zweite Steuereinheit, eines Energieverbrauchs für das zweite Fahrzeug (100'), wenn dieses auf dem ersten Segment (304) fährt, basierend auf der fahrzeugunabhängigen Straßenbedingung für das erste Segment (304) und einem aktuellen Betrieb des zweiten Fahrzeugs (100') auf dem ersten Straßensegment (304), und
- Code zum Schätzen, durch die zweite Steuereinheit, eines Gesamtenergieverbrauchs für das zweite Fahrzeug (100'), wenn dieses entlang der Straße (302) fährt, und
- Code zum Schätzen einer Betriebsreichweite für das zweite Fahrzeug (100') basierend auf dem Gesamtenergieverbrauch für das zweite Fahrzeug (100').

**Revendications**

1. Procédé informatisé conçu pour déterminer les conditions routières d'une route (302), la route (302) comprenant au moins un premier segment routier (304), le procédé comprenant les étapes suivantes :

- détermination (S1), par une unité de commande montée à bord d'un premier véhicule (100, 102, 104), d'une valeur de résistance routière pour le premier segment routier (304) où le premier véhicule (100, 102, 104) se déplace actuellement, la valeur de résistance routière dépendant d'un fonctionnement actuel du premier véhicule (100, 102, 104) sur le premier segment routier (304) et d'au moins un poids du premier véhicule, d'une sélection de pneus pour le premier véhicule, ou au niveau d'une ou sur la longueur du premier tronçon routier,
- fourniture (S2), par l'unité de commande embarquée, d'une collecte de données de véhicule à un serveur (202) agencé en communication en réseau (206) avec l'unité de commande, la collecte de données de véhicule comprenant la valeur de résistance routière pour le premier segment routier (304), les données de fonctionnement pour le premier véhicule (100, 102, 104) pour le premier segment routier (304) et les paramètres de sensibilité pour le premier véhicule (100, 102, 104), les paramètres de sensibilité du premier véhicule (100, 102, 104) étant liés aux propriétés aérodynamiques du premier véhicule (100, 102, 104),
- estimation (S3), au niveau du serveur (202), d'une condition de route indépendante du véhicule pour le premier segment (304) sur la base d'une pluralité de collectes correspondantes de données de véhicule pour le premier segment routier (304) fournies au serveur (202) à partir d'une pluralité de véhicules différents, y compris le premier véhicule (100, 102, 104),

- distribution, à l'aide du serveur (202), de l'état de route indépendant du véhicule pour le premier segment (304) à un second véhicule (100') utilisant la connexion en réseau (206), le second véhicule (100') circulant sur la route (302),
- estimation, à bord du second véhicule (100'), d'une consommation d'énergie pour le second véhicule (100') lors de son déplacement sur le premier segment (304) sur la base de la condition de la route indépendante du véhicule pour le premier segment (304) et d'un fonctionnement actuel du second véhicule (100') sur le premier segment routier (304), et
- estimation, à bord du second véhicule (100'), de la consommation totale d'énergie du second véhicule (100') lors de la circulation sur route (302), et
- estimation d'une portée opérationnelle pour le second véhicule (100') sur la base de la consommation totale d'énergie pour le second véhicule (100').

2. Procédé selon la revendication 1, dans lequel la consommation d'énergie totale dépend en outre d'une vitesse prédite pour le premier segment routier (304).

3. Procédé selon l'une quelconque des revendications précédentes, dans lequel l'étape d'estimation de la condition de route indépendante du véhicule pour le premier segment (304) est en outre basée sur un rapport météorologique pour la route (302) reçu au niveau du serveur (202).

4. Dispositif de commande (200) conçu pour déterminer les conditions routières d'une route (302), la route (302) comprenant au moins un premier segment routier (304), le dispositif de commande (200) comprenant un serveur (202) agencé en communication en réseau (206) avec une première unité de commande montée à bord d'un premier véhicule (100, 102, 104) et une seconde unité de commande montée à bord d'un second véhicule (100'), le dispositif de commande (200) étant conçu pour :

- déterminer, au moyen de la première unité de commande, une valeur de résistance routière pour le premier segment routier (304) où le premier véhicule (100, 102, 104) se déplace actuellement, la valeur de résistance routière dépendant d'un fonctionnement actuel du premier véhicule (100, 102, 104) sur le premier segment routier (304) et d'au moins un poids du premier véhicule, d'une sélection de pneus pour le premier véhicule, ou d'une température au niveau d'une ou sur la longueur du premier tronçon routier,
- fournir au serveur (202), par la première unité de commande embarquée, une collecte de données de véhicule comprenant la valeur de résistance routière pour le premier segment routier (304), des données de fonctionnement pour le premier véhicule (100, 102, 104) pour le premier segment routier (304) et des paramètres de sensibilité pour le premier véhicule (100, 102, 104), les paramètres de sensibilité du premier véhicule (100, 102, 104) étant liés aux propriétés aérodynamiques du premier véhicule (100, 102, 104),
- estimer, au niveau du serveur (202), une condition de route indépendante du véhicule pour le premier segment (304) sur la base d'une pluralité de collectes correspondantes de données de véhicule pour le premier segment routier (304) fournies au serveur (202) à partir d'une pluralité de véhicules différents, y compris le premier véhicule (100, 102, 104),
- distribuer, à l'aide du serveur (202), la condition de route indépendante du véhicule pour le premier segment (304) à la seconde unité de commande en utilisant la connexion en réseau (206), le second véhicule (100') circulant sur la route (302),
- estimer, par la seconde unité de commande, une consommation d'énergie pour le second véhicule (100') lors de son déplacement sur le premier segment (304) sur la base de la condition de la route indépendante du véhicule pour le premier segment (304) et d'un fonctionnement actuel du second véhicule (100') sur le premier segment routier (304), et
- estimer, par la seconde unité de commande, la consommation totale d'énergie du second véhicule (100') lors de son déplacement sur la route (302), et
- estimer une portée opérationnelle pour le second véhicule (100') sur la base de la consommation totale d'énergie pour le second véhicule (100').

5. Dispositif de commande (200) selon la revendication 4, dans lequel la consommation d'énergie totale dépend en outre d'une vitesse prédite pour le premier segment routier (304).

6. Dispositif de commande (200) selon l'une quelconque des revendications 4 à 5, dans lequel l'étape d'estimation de la condition de route indépendante du véhicule pour le premier segment (304) est en outre basée sur un rapport météorologique pour la route (302) reçu au niveau du serveur (202).

7. Dispositif de commande (200) selon l'une quelconque des revendications 4 à 6, comprenant en outre le premier et le second véhicule (100').

8. Dispositif de commande (200) selon l'une quelconque des revendications 4 à 7, dans lequel au moins l'un des premier et second véhicules est un camion (100, 100'), un bus (102) ou une voiture (104).

9. Dispositif de commande (200) selon la revendication 8, dans lequel le camion fonctionne de manière autonome.

10. Produit de programme informatique comprenant un support non transitoire lisible par ordinateur sur lequel sont stockés des moyens de programme informatique pour faire fonctionner un dispositif de commande (200) adapté pour déterminer les conditions routières d'une route (302), la route (302) comprenant au moins un premier segment routier (304), le dispositif de commande (200) comprenant un serveur (202) agencé en communication en réseau (206) avec une première unité de commande agencée à bord d'un premier véhicule (100, 102, 104) et une seconde unité de commande agencée à bord d'un second véhicule (100'), dans lequel le produit de programme informatique comprend :

- un code permettant de déterminer, par la première unité de commande embarquée, une valeur de résistance routière pour le premier segment routier (304) où circule actuellement le premier véhicule (100, 102, 104), la valeur de résistance de la route dépendant d'un fonctionnement en cours du premier véhicule (100, 102, 104) au niveau du premier segment routier (304) et d'au moins un poids du premier véhicule, d'une sélection de pneus pour le premier véhicule, ou d'une température au niveau d'une ou sur une longueur du premier segment routier,
- un code pour fournir (S2), par la première unité de commande embarquée, une collecte de données de véhicule au serveur, la collecte de données de véhicule comprenant la valeur de résistance routière pour le premier segment routier (304), des données de fonctionnement pour le premier véhicule (100, 102, 104) pour le premier segment routier (304) et des paramètres de sensibilité pour le premier véhicule (100, 102, 104), les paramètres de sensibilité pour le premier véhicule (100, 102, 104) étant liées aux propriétés aérodynamiques du premier véhicule (100, 102, 104),
- un code pour estimer (S3), au niveau du serveur (202), une condition routière indépendante du véhicule pour le premier segment (304) sur la base d'une pluralité de collectes correspondantes de données de véhicule pour le premier segment routier (304) fournies au serveur (202) à partir d'une pluralité de véhicules différents, y compris le premier véhicule (100, 102, 104),
- un code pour distribuer, à l'aide du serveur (202), la condition routière indépendante du véhicule pour le premier segment (304) à la seconde unité de commande par l'intermédiaire de la connexion en réseau (206), le second véhicule (100') circulant sur la route (302),
- un code pour estimer, par la seconde unité de commande, une consommation d'énergie pour le second véhicule (100') lors de son déplacement sur le premier segment (304) sur la base de la condition routière indépendante du véhicule pour le premier segment (304) et d'un fonctionnement actuel du second véhicule (100') sur le premier segment routier (304), et
- un codeur pour estimer, par la seconde unité de commande, une consommation totale d'énergie du second véhicule (100') lors de sa circulation sur route (302), et
- un code pour estimer la portée opérationnelle du second véhicule (100') sur la base de la consommation totale d'énergie du second véhicule (100').

Fig. 1A

Fig. 1B

Fig. 1C

Fig. 2

Fig. 3

Determine a road resistance value for a first road segment — S1

Provide the road resistance value to a server — S2

Estimate a vehicle independent road condition for the first segment — S3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016025508 A

- WO 2010081836 A